# EUROPÄISCHE PATENTSCHRIFT

(11) **EP 1 821 087 B1**
(45) Veröffentlichungstag und Bekanntmachung des Hinweises auf die Patenterteilung: **23.03.2016**
(21) Anmeldenummer: 07100604.3
(22) Anmeldetag: 16.01.2007
(51) Int. Cl.: G01J 3/02, G01J 3/42

(54) **Temperaturstrahler**
Temperature emitter
Radiateur thermique

(30) Priorität: 21.02.2006 DE 102006008409
(43) Veröffentlichungstag der Anmeldung: 22.08.2007
(73) Patentinhaber: Neuhaus, Dietmar, 40591 Düsseldorf (DE)
(72) Erfinder: Neuhaus, Dietmar, 40591 Düsseldorf (DE)
(74) Vertreter: von Kreisler Selting Werner - Partnerschaft von Patentanwälten und Rechtsanwälten mbB

(56) Entgegenhaltungen:
- EP-A- 0 708 316
- WO-A-94/01873
- DE-A1- 10 342 800
- SCITI D ET AL: "Laser-induced surface drilling of silicon carbide", APPLIED SURFACE SCIENCE, ELSEVIER, AMSTERDAM, NL, vol. 180, 1 January 2001 (2001-01-01), pages 92-101, XP007923089, ISSN: 0169-4332
- HAMANN C ET AL: "Laser machining of ceramic and silicon", PROCEEDINGS OF SPIE, S P I E - INTERNATIONAL SOCIETY FOR OPTICAL ENGINEERING, US, vol. 801, 1 January 1987 (1987-01-01), pages 130-137, XP007923090, ISSN: 0277-786X

## Beschreibung

Die Erfindung betrifft einen Temperaturstrahler mit hoher spezifischer Strahlungsleistung, insbesondere zur Verwendung in miniaturisierten optischen Systemen.

Für eine Reihe optischer Geräte, wie z. B. Spektrometer, erschließen sich neue Anwendungen, wenn es gelingt, die Geräte deutlich zu verkleinern. Hierzu müssen optische Komponenten, wie beispielsweise Temperaturstrahler, die in Absorptionsspektrometern verwendet werden, verkleinert werden. Temperaturstrahler sind Flächenstrahler, d. h. eine Verringerung der Abmessung des Strahlers führt zu einer deutlichen Reduzierung der abgestrahlten Leistung mit ungünstigen Auswirkungen auf die Eigenschaften des optischen Gerätes. Im Fall eines Absorptionsspektrometers würde die verringerte Strahlungsleistung die Auflösung und die Empfindlichkeit des Spektrometers beeinträchtigen. Die Erhöhung der spezifischen Strahlungsleistung des Temperaturstrahlers ist ein Ausweg, um den ungünstigen Nebenwirkungen der Verkleinerung zu begegnen. Es ist bekannt, dass die spezifische Strahlungsleistung eines Temperaturstrahlers durch eine Erhöhung der Temperatur des Strahlers vergrößert werden kann; mit der Schwierigkeit, dass eine erhöhte Temperatur auch die Energieverluste des Strahlers durch Wärmeleitung erhöht. Gerade bei kleinen optischen Systemen ist aber der Energieeintrag durch Wärmeleitung in die Umgebung des Temperaturstrahlers ein Problem. Bei den bekannten miniaturisierten Temperaturstrahlern wird mit einer elektrischen Widerstandsheizung gearbeitet, mit der Problematik, dass elektrische Leiter auch gute Wärmeleiter sind und somit die thermische Isolierung schwierig ist.

Ein Temperaturstrahler nach dem Oberbegriff des Patentanspruchs 1 ist beschrieben in EP 0 708 316 A2. Dieser Temperaturstrahler ist auf einer Trägerplatte mit einer Absorptionsschicht versehen, die von einer Laserdiode von unten angestrahlt wird. Die Absorptionsschicht sendet daraufhin eine Breitbandstrahlung aus.

In DE 103 42 800 A1 sind Absorptions- und/oder Emissionselemente beschrieben, deren Oberfläche bearbeitet ist, so dass pyramidenartige sehr feine Strukturen entstehen. Diese Strukturen bilden einzelne Erhöhungen. Eine andere Möglichkeit ist die Bildung von Poren.

Weitere relevante Dokumente sind WO 9401873, US 3660659, JP 08029262 und US 20050093210.

Der Erfindung liegt die Aufgabe zugrunde, einen miniaturisierten Temperaturstrahler mit einer hohen spezifischen Leistung zu schaffen.

Der erfindungsgemäße Temperaturstrahler ist durch den Patentanspruch 1 definiert. Er weist einen Strahlungswandler auf, der eine mit einem Laserstrahl bestrahlte strahlungsabsorbierende Empfangsfläche und eine Emissionsfläche hat. Der Strahlungswandler besteht aus einem kleinen Körper, der die Laserstrahlung absorbiert und sich dadurch stark erwärmt. Der Strahlungswandler wird durch die Laserstrahlung erwärmt, um seinerseits als Temperaturstrahler zu wirken. Aus der Laserstrahlung, bei der es sich in der Regel um eine elektromagnetische Strahlung im Bereich des infraroten Lichtes handelt, wird der Strahlungswandler aufgeheizt, so dass er als Temperaturstrahler wirkt, wobei die Temperaturstrahlung aus mehr Wellenlängen besteht als die absorbierte Strahlung.

Besonders vorteilhaft ist der kleine Körper des Strahlungswandlers, der auch als Absorber/Emitter bezeichnet werden kann, aus einem hochtemperaturfesten Werkstoff gefertigt. Ein geeigneter Werkstoff ist beispielsweise Siliziumkarbid.

Gemäß einer bevorzugten Ausgestaltung der Erfindung ist vorgesehen, dass die Empfangsfläche und/oder die Emissionsfläche des Strahlungswandlers aus einem begrenzten Flächenbereich von gegenüber ihrer Umgrenzung erhöhter Porosität besteht. Durch Mikrostrukturierung werden die Absorptionseigenschaften bzw. Emissionseigenschaften des Strahlungswandlers in zumindest Teilen seiner Oberfläche geeignet verändert. Durch die Mikrostrukturierung der Oberfläche wird erreicht, dass die betreffenden Stellen die Absorptions- bzw. Emissionseigenschaften eines schwarzen Strahlers erlangen oder diesen Eigenschaften zumindest sehr nahe kommen. Die Absorptionseigenschaften eines schwarzen Strahlers sind günstig, weil hierdurch die Laserstrahlung optimal absorbiert werden kann. Gleichfalls optimal sind die Emissionseigenschaften eines schwarzen Körpers. Es ist vorteilhaft, die Absorptions- bzw. Emissionseigenschaften des Strahlungswandlers an Teilen seiner Oberfläche durch Mikrostrukturierung, d. h. feine Veränderungen der Geometrie der Oberfläche zu verändern, weil dies zusätzlich zu den intrinsischen Eigenschaften des Werkstoffes des Strahlungswandlers seine Absorptions- und Emissionseigenschaften bestimmt. Dadurch werden Gestaltungsspielräume für die Konstruktion des Temperaturstrahlers eröffnet. Hierbei wird der Umstand genutzt, dass die Emissions- und Absorptionseigenschaften eines Körpers auch von dessen Geometrie abhängen (Andre Goffe, Revue d'Optique, No. 1-3, Januar - März 1945, Seite 1). Durch die Mikrostrukturierung von Teilen der Oberfläche des Strahlungswandlers kann vorteilhaft die Absorptionseigenschaft an der Stelle optimiert werden, an der der Laserstrahl auf den Strahlungswandler auftrifft. Das gleiche gilt für die Emissionseigenschaften, die an einer vorgegebenen Stelle an der Oberfläche des Strahlungswandlers durch Mikrostrukturierung gezielt verändert werden können. Hierbei ist es von Vorteil, wenn das intrinsische Emissionsvermögen des Werkstoffes des Strahlungswandlers, d. h. das Emissionsvermögen einer polierten Fläche aus diesem Werkstoff, möglichst gering ist, weil hierdurch eine optimale Emission von Strahlung nur von den mikrostrukturierten Teilen der Oberfläche ausgeht. Somit können die Strahlungsverluste gering gehalten werden. Hierdurch wird es möglich, für kleine optische Geräte, miniaturisierte Temperaturstrahler mit hoher spezifischer Strahlungsleistung zu erhalten.

Im Folgenden wird unter Bezugnahme auf die Zeichnungen ein Ausführungsbeispiel der Erfindung näher erläutert.

Es zeigen:
- Fig. 1: Eine perspektivische Darstellung des Temperaturstrahlers, teilweise geschnitten, und
- Fig. 2: eine vergrößerte Darstellung des Körpers des Strahlungswandlers.

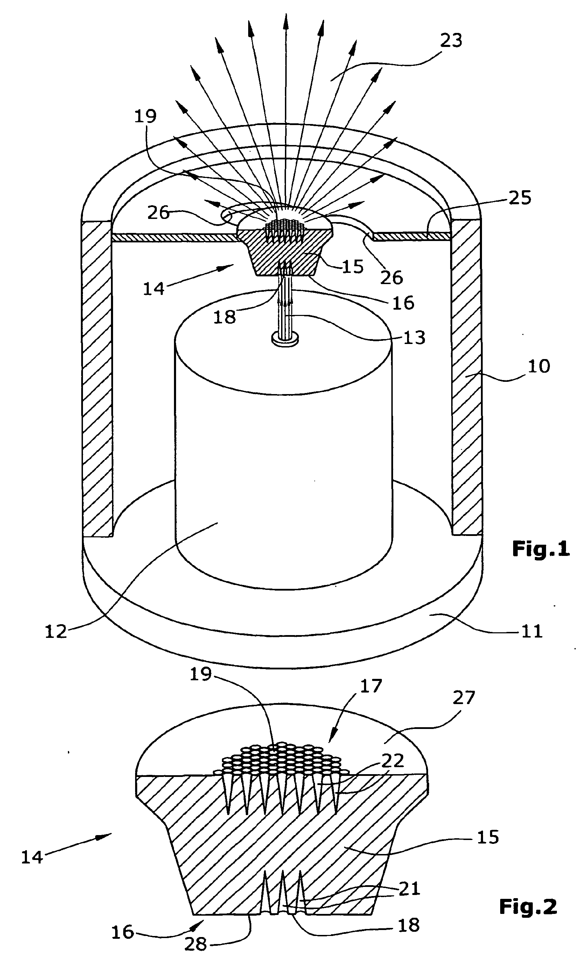

In Figur 1 ist der Gesamtaufbau des Strahlungswandlers dargestellt. Dieser weist ein rohrförmiges Gehäuse 10 auf, das mit einer unteren Stirnwand 11 abgeschlossen ist, die als Basisplatte für einen Laser 12 dient. Der Laser 12 sendet einen Laserstrahl 13 entlang der Achse des Gehäuses 10 aus. Im Wege des Laserstrahls 13 ist der Strahlungswandler 14 aufgehängt. Dieser besteht aus einem generell kegelstumpfförmigen Körper aus einem hochtemperaturfesten Werkstoff, wie beispielsweise Siliziumkarbid. Siliziumkarbid besitzt zusätzlich eine hohe Temperaturschockfestigkeit, die es ermöglicht, den Strahlungswandler schnell aufzuheizen und abzukühlen. Dies ist von Vorteil für einige Anwendungen in der Spektroskopie, die einen Temperaturstrahler mit pulsierender Strahlungsleistung benötigen.

Der Körper 15 weist eine kleinere untere Stirnwand 16 und eine größere obere Stirnwand 17 auf. Der Durchmesser der unteren Stirnwand beträgt beispielsweise 0,8586 mm und derjenige der oberen Stirnwand beträgt beispielsweise 1,4 mm. Der Bereich der unteren Stirnwand 16, auf den der Laserstrahl 13 auftrifft, bildet die Empfangsfläche 18. Ein Teilbereich der oberen Stirnwand 17 bildet die Emissionsfläche 19. Die Empfangsfläche 18 hat einen Durchmesser von beispielsweise 0,05 mm und die Emissionsfläche 19 einen Durchmesser von beispielsweise 0,25 mm.

Die Empfangsfläche 18 und die Emissionsfläche 19 enthalten jeweils eine poröse Mikrostruktur. Diese besteht im vorliegenden Fall aus kegelförmigen Bohrungen 21 bzw. 22 (Figur 2), welche sich von der jeweiligen Stirnwand aus rechtwinklig in den Körper 15 erstrecken. Der größte Durchmesser einer einzelnen Bohrung beträgt in diesem Ausführungsbeispiel etwa 50 µm und die Tiefe etwa 0,22 mm. Die kegelförmigen Bohrungen 21, 22 wurden gewählt, weil sie sich leicht durch Laserbearbeitung herstellen lassen. Durch die Mikrostrukturierung der Empfangsfläche 18 und der Emissionsfläche 19 wird das Emissions- und Absorptionsvermögen erhöht, wie es in der bereits erwähnten Veröffentlichung von Andre Gouffé beschrieben ist. Der Laserstrahl 13 wird gezielt auf die Empfangsfläche 18 gerichtet und auf diese Fläche beschränkt.

Die Umgrenzungen 27 und 28, welche die Empfangsfläche 18 und die Emissionsfläche 19 umgeben, sind glatt und vorzugsweise poliert, ebenso wie die seitliche Umfangsfläche des Körpers 15. Die Emissionsfläche 19 mit den zahlreichen kegelförmigen Bohrungen wirkt als Emitter der Temperaturstrahlung 23 mit einem durch die Mikrostrukturierung erhöhten Emissionskoeffizienten.

Der Körper 15 ist in einer Halterung 25 befestigt, welche in dem rohrförmigen Gehäuse 10 im Abstand von der unteren Stirnwand 11 angebracht ist. Die Halterung 25 besteht hier aus einer Scheibe aus einem Material mit schlechter Wärmeleitfähigkeit. Besonders vorteilhaft kann ein Keramikmaterial, insbesondere Zirkonoxid, verwendet werden. Die Halterung 25 enthält ein Mittelloch, in das der Körper 15 eingesetzt ist. Am Rande des Mittellochs sind Aussparungen 26 vorgesehen. Die Stege zwischen den Aussparungen 26 bilden eine Dreipunkthalterung, welche den Körper 15 nur an drei Punkten berührt, wodurch der gewünschte schlechte Wärmeübergang zu der Halterung 25 erreicht wird.
Der Laser 12 enthält als Lichtquelle insbesondere eine kleinformatige Laserdiode.

Die Emissionsfläche 19 wirkt als Flächenstrahler mit gleichmäßig über die gesamte Fläche verteilter Strahlungsdichte. In Folge der polierten Umgrenzungen, die die Empfangsfläche und die Emissionsfläche umgeben, emittieren diese Fläche im Vergleich mit den strukturierten Oberflächen sehr schlecht. Es entsteht also eine hohe Strahlungskonzentration an der Emissionsfläche 19.

## Patentansprüche

1. Temperaturstrahler, insbesondere zur Verwendung in miniaturisierten optischen Systemen, mit einem Laser (12), der eine strahlungsabsorbierende Empfangsfläche (18) eines Strahlungswandlers (14) mit einem Laserstrahl (13) bestrahlt, wobei der Strahlungswandler eine von der Empfangsfläche verschiedene, Strahlung aussendende Emissionsfläche (19) aufweist,
**dadurch gekennzeichnet, dass**
die Empfangsfläche (18) eine Mikrostrukturierung aus zahlreichen kegelförmigen oder kegelstumpfförmigen Bohrungen (21) enthält,
und dass die Emissionsfläche (19) eine Mikrostrukturierung aus zahlreichen kegelförmigen oder kegelstumpfförmigen Bohrungen (22) enthält.

2. Temperaturstrahler nach Anspruch 1, **dadurch gekennzeichnet, dass** der Strahlungswandler (14) aus einem Keramikmaterial, insbesondere Siliziumkarbid, besteht.

3. Temperaturstrahler nach Anspruch 1 oder 2, **dadurch gekennzeichnet, dass** die Umgrenzung (28) der Empfangsfläche (18) eine polierte Fläche aufweist.

4. Temperaturstrahler nach einem der vorhergehenden Ansprüche, **dadurch gekennzeichnet, dass** die Bohrungen (21,22) an der Oberfläche des Strahlungswandlers (14) dicht benachbart angeordnet sind.

5. Temperaturstrahler nach einem der Ansprüche 1 - 4, **dadurch gekennzeichnet, dass** die Umgrenzung der Emissionsfläche (19) eine polierte Fläche aufweist.

6. Temperaturstrahler nach einem der Ansprüche 1 bis 5, **dadurch gekennzeichnet, dass** die Bohrungen (22) an der Oberfläche des Strahlungswandlers (14) dicht benachbart angeordnet sind.

7. Temperaturstrahler nach einem der vorhergehenden Ansprüche, **dadurch gekennzeichnet, dass** der Strahlungswandler (14) aus einem Körper (15) besteht, der von einer schlecht-wärmeleitenden Halterung (25) getragen ist.

8. Temperaturstrahler nach Anspruch 7, **dadurch gekennzeichnet, dass** die Halterung (25) eine Dreipunkthalterung ist, welche den Körper (15) nur an drei Punkten berührt.

9. Temperaturstrahler nach einem der Ansprüche 1 - 8, **dadurch gekennzeichnet, dass** ein rohrförmiges Gehäuse (10) vorgesehen ist, das auf einer Stirnwand (11) einen parallel zur Gehäuseachse strahlenden Laser (12) enthält und das eine den Strahlungswandler (14) haltende Halterung (25) trägt.

10. Temperaturstrahler nach einem der Ansprüche 1 - 9, **dadurch gekennzeichnet, dass** der Strahlungswandler (14) einen generell kegelstumpfförmigen Körper (15) aufweist, wobei die Empfangsfläche (18) an der kleinen Stirnwand (16) und die Emissionsfläche (19) an der größeren Stirnwand (17) vorgesehen ist.

11. Temperaturstrahler nach einem der Ansprüche 1 - 10, **dadurch gekennzeichnet, dass** der Werkstoff des Strahlungswandlers (14) ein niedriges intrinsisches Emissionsvermögen von maximal 1 % hat.

## Claims

1. A thermal radiator, particularly for use in miniaturized optical systems, comprising a laser (12) radiating a laser beam (13) onto a radiation-absorptive receiving surface (18) of a radiation converter (14), said radiation converter comprising a radiation-emitting emission surface (19) different from the receiving surface,
**characterized in that**
the receiving surface (18) includes a microstructuring made of a large number of conical or frustoconical bores (21),
and that the emission surface (19) includes a microstructuring made of a large number of conical or frustoconical bores (22).

2. The thermal radiator according to claim 1, **characterized in that** the radiation converter (14) is made of a ceramic material, particularly silicon carbide.

3. The thermal radiator according to claim 1 or 2, **characterized in that** the enclosure (28) of the receiving surface (18) comprises a polished surface.

4. The thermal radiator according to any one of the preceding claims, **characterized in that** the bores (21,22) on the surface of the radiation converter (14) are arranged closely adjacent to each other.

5. The thermal radiator according to any one of claims 1 to 4, **characterized in that** the enclosure of the emission surface (19) comprises a polished surface.

6. The thermal radiator according to any one of claims 1 to 5, **characterized in that** the bores (22) on the surface of the radiation converter (14) are arranged closely adjacent to each other.

7. The thermal radiator according to any one of the preceding claims, **characterized in that** the radiation converter (14) consists of a body (15) held by a low heat-conducting support (25).

8. The thermal radiator according to claim 7, **characterized in that** said support (25) is a three-point support contacting the body (15) only at three points.

9. The thermal radiator according to any one of claims 1 to 8, **characterized in that** a tubular housing (10) is provided which on an end wall (11) includes a laser (12) radiating parallel to the housing axis and which carries a support (25) holding the radiation converter (14).

10. The thermal radiator according to any one of claims 1 to 9, **characterized in that** the radiation converter (14) comprises a substantially frustoconical body (15), wherein the receiving surface (18) is provided on the small end wall (16) and the emission surface (19) is provided on the larger end wall (17).

11. The thermal radiator according to any one of claims 1 to 10, **characterized in that** the material of the radiation converter (14) has a low intrinsic emission capacity of maximally 1%.

## Revendications

1. Radiateur thermique, en particulier destiné à l'utilisation dans un système optique miniaturisé, avec un laser (12), qui irradie, au moyen d'un rayon laser (13), une surface de réception (18), absorbant les rayonnements, d'un convertisseur de rayonnement (14), le convertisseur de rayonnement présentant une surface d'émission (19) émettant un rayonnement différent de la surface de réception,
**caractérisé en ce que**
la surface de réception (18) comprend une microstructuration composée de nombreux forages (21) de forme conique ou tronconique,
et **caractérisé en ce que** la surface d'émission (19) comprend une microstructuration composée de nombreux forages (22) de forme conique ou tronconique.

2. Radiateur thermique selon la revendication 1, **caractérisé en ce que** le convertisseur de rayonnement (14) est composé d'un matériau en céramique, en particulier de carbure de silicium.

3. Radiateur thermique selon la revendication 1 ou 2, **caractérisé en ce que** l'enceinte (28) de la surface de réception (18) présente une surface polie.

4. Radiateur thermique selon l'une des revendications précédentes, **caractérisé en ce que** les forages (21, 22) sont disposés de manière étroitement contiguë à la surface du convertisseur de rayonnement (14).

5. Radiateur thermique selon l'une des revendications 1 à 4, **caractérisé en ce que** l'enceinte de la surface d'émission (19) présente une surface polie.

6. Radiateur thermique selon l'une des revendications 1 à 5, **caractérisé en ce que** les forages (22) sont disposés de manière étroitement contiguë à la surface du convertisseur de rayonnement (14).

7. Radiateur thermique selon l'une des revendications précédentes, **caractérisé en ce que** le convertisseur de rayonnement (14) est composé d'un corps (15) qui est supporté par un support (25) ayant une mauvaise conductivité thermique.

8. Radiateur thermique selon la revendication 7, **caractérisé en ce que** le support (25) est un support à trois points qui n'entre en contact avec le corps (15) qu'au niveau de trois points.

9. Radiateur thermique selon l'une des revendications 1 à 8, **caractérisé en ce qu'**un boîtier (10) tubulaire est prévu, lequel comprend sur une paroi frontale (11) un laser (12) dont le rayon émet parallèlement à l'axe du boîtier, et lequel supporte un support (25) soutenant le convertisseur de rayonnement (14).

10. Radiateur thermique selon l'une des revendications 1 à 9, **caractérisé en ce que** le convertisseur de rayonnement (14) présente un corps (15) de forme tronconique dans son ensemble, la surface de réception (18) étant prévue au niveau de la petite paroi frontale (16) et la surface d'émission (19) étant prévue au niveau de la plus grande paroi frontale (17).

11. Radiateur thermique selon l'une des revendications 1 à 10, **caractérisé en ce que** le matériau du convertisseur de rayonnement (14) possède une faible capacité d'émission intrinsèque de 1% au plus.
